**Europäisches Patentamt**

**European Patent Office**

**Office européen des brevets**

(19)

(11) Numéro de publication : **0 162 442**
**B1**

(12)                    ## FASCICULE DE BREVET EUROPÉEN

(45) Date de publication du fascicule du brevet :
**09.11.88**

(51) Int. Cl.⁴: **H 04 L 25/49**

(21) Numéro de dépôt : **85106205.9**

(22) Date de dépôt : **21.05.85**

(54) **Procédé de transmission synchrone de données et dispositif pour sa mise en oeuvre.**

(30) Priorité : **23.05.84 FR 8408084**

(43) Date de publication de la demande :
**27.11.85 Bulletin 85/48**

(45) Mention de la délivrance du brevet :
**09.11.88 Bulletin 88/45**

(84) Etats contractants désignés :
**BE DE FR GB IT LU NL SE**

(56) Documents cités :
**FR-A- 2 469 047**
**FR-A- 2 536 609**
**IBM TECHNICAL DISCLOSURE BULLETIN, vol. 25,**
**no. 11A, avril 1983, New York, US; A. WEINBERGER:**
**"Parity checking"**

(73) Titulaire : **ALCATEL CIT**
**33, rue Emeriau**
**F-75015 Paris (FR)**

(72) Inventeur : **Le Mouel, Bernard**
**Gouzabas**
**F-22700 Saint Quay Perros (FR)**
Inventeur : **Le Bescont, Hervé**
**Résidence Haute Rive Bâtiment D**
**F-22300 Lannion (FR)**
Inventeur : **Le Meur, Jean-Paul**
**Les Fontaines Bâtiment No. 42**
**F-22300 Lannion (FR)**

(74) Mandataire : **Weinmiller, Jürgen et al**
**Lennéstrasse 9 Postfach 24**
**D-8133 Feldafing (DE)**

EP 0 162 442 B1

## Description

La présente invention concerne la transmission synchrone de données à très grand débit notamment par des liaisons à fibres optiques.

Dans une liaison de transmission de données, les données sont transmises sous la forme d'une suite de symboles isochrones ne présentant pas d'énergie en continu et peu d'énergie en basse fréquence pour simplifier le contrôle du niveau des sources d'émission et du gain des récepteurs ainsi que l'égalisation, et pour permettre la transmission par le même support de voies de service et de télésurveillance traités par des équipements distincts dans les terminaux et les pointes intermédiaires de régénération. Cette suite de symboles est engendrée à partir des données en utilisant un code redondant permettant de transmettre des informations sur le rythme des symboles nécessaires à leur récupération et sur la qualité de transmission.

Dans le cas de liaisons par fibres optiques on adopte de préférence un signal en ligne à deux niveaux de type binaire en raison des non-linéarités de la source optique et de sa dépendance à la température. Le code binaire-binaire utilisé est en général un code par blocs genre nBmB à plusieurs alphabets et à somme numérique bornée qui convertit des blocs de n bits en blocs de m bits, m étant plus grand que n, d'une manière telle que la différence entre les nombres de uns ou marques et de zéros ou espaces transmis soit en moyenne nulle (FR-A-2 469 047). Ce genre de code redondant n'utilise pas toutes les configurations possibles des blocs de m bits. Il permet d'éliminer les moins favorables à la récupération de rythme et de réserver certaines configurations non imitables par une succession de bits appartenant à deux blocs consécutifs de m bits autorisés pour servir à la synchronisation des blocs. Il permet en outre la détection des erreurs en ligne par la surveillance en réception de l'apparition de configurations non autorisées de blocs de m bits. Malheureusement sa mise en œuvre implique une manipulation assez complexe des bits qu'il est difficile de réaliser pour des très grands débits car on atteint la vitesse limite de fonctionnement des technologies actuelles de semi-conducteurs.

Il a déja été proposé, pour tourner cette difficulté, un code par blocs consistant à partager les données à transmettre en blocs consécutifs de M bits et à coder chacun des blocs par un mot à (M + 1) bits constitués des M bits du bloc inversés ou non selon que le mot codé à (M + 1) bits qui serait obtenu en l'absence d'inversion présente une disparité (différence entre les nombres de uns et de zéros) de même signe ou de signe contraire à celle de l'ensemble des symboles déjà transmis et complétés par un bit d'inversion placé en tête de chaque bloc signalant s'il y a eu ou non inversion. Ce code de type MB 1C présente l'inconvénient par rapport aux codes par blocs nBmB à plusieurs alphabets de ne pas permettre la récupération de la synchronisation des blocs ni la détection d'erreurs. Une manière de tourner la difficulté de synchronisation de bloc consiste à faire précéder, avant inversion éventuelle et transmission, chaque bloc de M bits pourvu de son bit d'inversion par un bit de trame de même valeur que le dernier bit du bloc. Ce code de type MB 1C 1T ne résout pas le problème de la détection d'erreur qui doit se faire par un traitement préalable des données au moyen d'un code détecteur d'erreurs diminuant le rendement global de la transmission.

La présente invention a pour but une transmission synchrone de données par un code du genre MB 1C 1T précité qui permette en outre la détection d'erreurs et qui soit d'une mise en œuvre plus aisée pour les grands débits de transmission que les codes de type nBmB à plusieurs alphabets.

Elle a pour objet un procédé de transmission synchrone de données dans lequel les symboles transmis sont engendrés à partir d'un codage de type MB 1C 1T ayant un bit de trame dont la valeur est fonction de la parité de chaque bloc de M bits à coder, le nombre M étant choisi égal à un nombre pair.

Elle a également pour objet des circuits de codage et de décodage mettant en œuvre le procédé précité.

Le bit de trame permet, en raison même de sa définition, une détection d'erreur au sein de chaque bloc transmis. Il rend en outre constante la parité des ensembles formés d'un bloc de M bits, d'un bit de trame et d'un bit d'inversion résultant du codage. Cette propriété autorise la récupération en réception de la synchronisation de blocs car elle permet de distinguer la découpe en blocs adoptée à l'émission parmi toutes les autres possibles. Elle permet en outre un contrôle du taux d'erreurs de transmission sans reprise de la synchronisation de blocs par surveillance de la composante continue qui en résulte dans le signal de parité obtenu en divisant par deux le train d'impulsions codées reçues.

Les définitions des bits de parité et d'inversion se font dans un souci de simplification de mise en œuvre du codage et d'efficacité de la détection d'erreurs. En particulier elles peuvent se faire en fonction d'un choix d'une parité paire ou impaire que l'on impose aux ensembles formés d'un bloc de M bits, d'un bit de trame et d'un bit d'inversion résultant du codage.

D'autres caractéristiques et avantages de l'invention ressortiront de la description ci-après d'un mode de mise en œuvre donné à titre d'exemple. Cette description sera faite en regard du dessin dans lequel :

— la figure 1 est un schéma bloc d'un codeur

— la figure 2 est un schéma détaillant un calculateur de parité et de somme numérique de mot utilisé dans le codeur de la figure 1

— la figure 3 est un schéma détaillant un calculateur de somme numérique courante et un circuit d'inversion utilisé dans la figure 1

— et la figure 4 est le schéma d'un décodeur adapté au codeur de la figure 1.

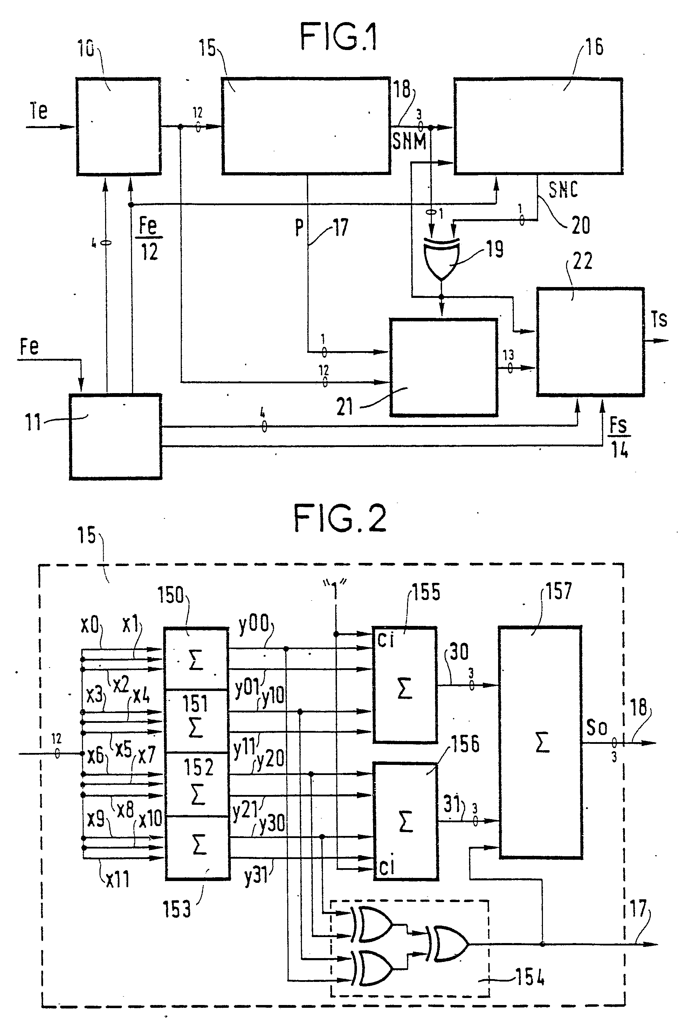

La figure 1 représente schématiquement un codeur mettant en œuvre un code de type MB 1C 1T dans lequel le bit de trame est un bit de parité et où le nombre M a été pris égal à 12 en raison des possibilités de simplification des organes de codage que permet cette valeur sans trop accroître le débit en ligne. Il est bien entendu toutefois que l'invention n'est pas limitée à cette valeur particulière de M.

Ce codeur reçoit un train de données binaires isochrones Te à coder ayant un débit Fe et délivre en sortie un train de données binaires isochrones codées Ts ayant un débit Fs égal au $7/6^e$ du débit d'entrée Fe. Il présente en entrée un démultiplexeur 10 qui, sous la commande d'une base de temps 11 synchronisée par le débit Fe du train de données binaires incident Te, transforme ce dernier en blocs successifs de 12 bits parallèles disponibles sur sa sortie. Deux circuits logiques de calcul 15, 16 sont placés à la suite du démultiplexeur 10. Le premier 15 délivre sur une sortie 17 le bit de parité ou de trame du codage, désigné ci-après par P, et sur une sortie 18 la valeur d'une somme numérique avec signe SNM correspondant au mot binaire formé du bloc de 12 bits disponible en sortie du démultiplexeur 10 complété par le bit de parité P et un bit d'inversion C prépositionné au niveau logique choisi pour signaler un bloc non inversé. Le deuxième 16 reçoit en entrée la somme numérique de mot SNM délivrée par le premier circuit logique de calcul 15 ainsi que le signal de sortie d'un circuit de décision d'inversion 19 et délivre sur une sortie 20 le signe de la somme numérique courante SNC du train de données binaires Ts engendré par le codeur. Le circuit de décision d'inversion 19 compare les signes de la somme numérique de mot SNM et de la somme numérique courante SNC délivrées respectivement par les deux circuits logiques de calcul 15, 16 et commande un circuit d'inversion 21 opérant sur le bloc de 12 bits disponible en sortie du démultiplexeur 10 et sur le bit de parité P disponible en sortie du premier circuit logique de calcul 15. Le mot de 13 bits qu'il délivre est appliqué, avec la commande du circuit de décision d'inversion 19 constituant le bit d'inversion C à délivrer à un circuit multiplexeur 22 qui, sous la commande de la base de temps 11, transforme la succession de mots de 14 bits qu'il reçoit en un train de données binaires isochrones Ts de débit Fs égal à 7/6 Fe.

Le circuit logique de calcul 15 est détaillé à la figure 2. Il se compose de plusieurs additionneurs binaires en cascade. Un premier groupe de quatre additionneurs binaires complets 150, 151, 152, 153 de trois nombres binaires de un bit reçoit sur ses entrées les 12 bits parallèles délivrés par le démultiplexeur 10. Un additionneur incomplet 154 de quatre nombres binaires de un bit ne délivrant que le bit de plus faible poids du résultat de l'addition a ses entrées connectées aux sorties des bits de plus faible poids des quatre additionneurs du premier groupe d'additionneurs et fournit en sortie le bit de parité P. Un deuxième groupe de deux additionneurs complets 155, 156 de deux nombres binaires de deux bits additionnent deux à deux les nombres délivrés par le premier groupe d'additionneur en présence d'une retenue d'ordre 0 matérialisée par un niveau logique 1 sur leur entrée de retenue Ci. Un dernier additionneur complet 157 de deux nombres binaires de quatre bits additionne les nombres délivrés par le deuxième groupe d'additionneurs 155, 156 en présence d'une retenue d'ordre 0 constituée de la valeur du bit de parité P.

La parité du bloc de 12 bits disponibles en sortie du démultiplexeur 10 est celle du nombre de uns qu'il contient. En binaire, elle correspond à la valeur du bit de plus faible poids de la sommation des douze bits du bloc considérés comme 12 nombres binaires indépendants de un bit. Cette sommation est faite en deux étapes, l'une au cours de laquelle le premier groupe d'additionneurs 150, 151, 152, 153 effectue quatre sommes partielles $y_0$, $y_1$, $y_2$, $y_3$ trois à trois de ces 12 bits et l'autre au cours de laquelle, l'additionneur incomplet 154 calcule la valeur du bit de plus faible poids de la somme des bits de plus faible poids $y_{00}$, $y_{10}$, $y_{20}$, $y_{30}$ des quatre sommes partielles.

L'additionneur incomplet 154 peut être constitué, comme représenté, par une cascade de trois portes logiques de type « ou exclusif » à deux entrées. Il engendre un bit de parité P au niveau logique 1 ou 0 selon que le bloc de 12 bits est impair ou pair.

Le mot constitué du bloc de 12 bits délivré par le démultiplexeur 10 et de son bit de parité P a une parité paire constante. Le mot de 14 bits constitué du bloc de 12 bits délivré par le démultiplexeur 10, de son bit de parité P et du bit d'inversion C prépositionné à un niveau logique prédéterminé choisi ici égal à un a une parité impaire constante. Cette propriété de parité est conservée dans une inversion en raison du nombre pair de bits.

La somme numérique de mot SNM, avant une éventuelle inversion, est proportionnelle à la différence entre les nombres de uns et de zéros dans le mot formé du bloc de 12 bits disponible en sortie du démultiplexeur 10, de son bit de parité P et de son bit d'inversion C.

Soit $\alpha$ le nombre de uns, le nombre de zéros sera :

$$14 - \alpha$$

et la somme numérique de mot SNM s'exprime par :

$$SNM = k[\alpha - (14 - \alpha)]$$
$$= 2 k(\alpha - 7)$$

k étant un coefficient de proportionnalité arbitraire.

Soit $x_0$, ..., $x_{11}$ les 12 bits disponibles en parallèle à la sortie du démultiplexeur 10, le nombre $\alpha$ s'exprime par la relation :

$$\alpha = \sum_{i=0}^{11} x_i + C + P$$

Soit $y_0$, ..., $y_3$ les sommes partielles effectuées par le premier groupe d'additionneurs 150, 151, 152, 153 respectivement :

$$y_0 = x_0 + x_1 + x_2$$
$$y_1 = x_3 + x_4 + x_5$$
$$y_2 = x_6 + x_7 + x_8$$
$$y_3 = x_9 + x_{10} + x_{11}$$

le nombre $\alpha$ s'exprime en fonction des sommes partielles délivrées par le premier groupe d'additionneurs par la relation :

$$\alpha = y_0 + y_1 + y_2 + y_3 + C + P$$

Soit $z_0$, $z_1$, les sommes partielles effectuées par le deuxième groupe d'additionneurs 155, 156 dont les entrées de retenue sont au niveau logique 1,

$$z_0 = y_0 + y_1 + 1$$
$$z_1 = y_2 + y_3 + 1$$

Le nombre $\alpha$ s'exprime en fonction des sommes partielles délivrées par le deuxième groupe d'additionneurs par la relation :

$$\alpha = z_0 + z_1 + C + P - 2$$

Soit $S_0$ la somme effectuée par le dernier additionneur 157 dont l'entrée de retenue reçoit le bit de parité P.

$$S_0 = z_0 + z_1 + P$$

Le nombre $\alpha$ s'exprime en fonction de $S_0$ par la relation :

$$\alpha = S_0 + C - 2$$

et par conséquent, la somme numérique de mot par :

$$SNM = 2\,k\,(S_0 + C - 9)$$

En admettant, ce qui est le cas, que le bit d'inversion C est au niveau logique 1 lorsqu'il est ajouté au bloc de 12 bits délivré par le démultiplexeur 10 et à son bit de parité, la somme numérique de mot SNM s'exprime en fonction du nombre $S_0$ délivré en sortie de l'additionneur 157 par la relation :

$$SNM = 2\,k\,(S_0 - 8)$$

La constante k peut être prise égale à 1/2 pour simplifier. La somme $S_0$ délivrée par l'additionneur 157, égale à la somme des 15 bits du mot formé par le bloc de 12 bits délivrés par le démultiplexeur 10, son bit de parité P et des deux bits de retenue s'exprime sur quatre bits. La valeur de la somme numérique de mot SNM s'obtient en soustrayant la valeur 8 à la somme $S_0$. Dans une arithmétique binaire à quatre chiffres en complément à deux, cette soustraction se fait en ajoutant 1 000 de sorte que l'on peut considérer que la somme $S_0$ représente, dans cette arithmétique, la somme numérique de mot affectée d'un signe négatif. Il n'est pas nécessaire de se soucier du signe négatif qui peut être pris en compte dans la constante k prise alors égale à — 1/2. En outre, on remarque que la somme $S_0$ est paire car elle est égale à la somme des uns fournis par le bloc de 12 bits délivré par le démultiplexeur 10 et son bit de parité qui sont ici en nombre pair et deux uns ajoutés par les entrées de retenue des additionneurs 154, 155 et que par conséquent le bit de plus faible poids de cette somme $S_0$ toujours nul peut être négligé dans le calcul de la somme numérique courante et utilisé éventuellement à des fins de contrôle du bon fonctionnement.

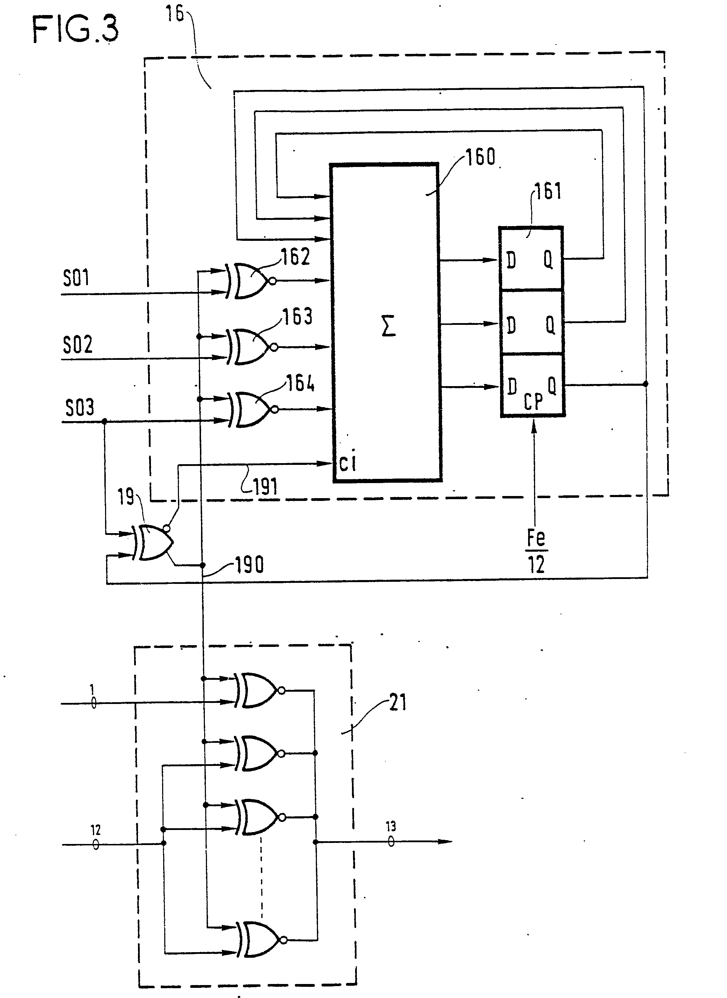

Le circuit logique 16 de calcul de la somme numérique courante SNC du train de données délivré par le codeur est détaillé à la figure 3. Il a été conçu en tenant compte du fait que la somme numérique de mot lui est délivrée dans une arithmétique binaire à trois chiffres en complément à deux. Il comporte un additionneur binaire complet 160 de deux nombres binaires de trois bits ayant sa sortie rebouclée à une entrée par l'intermédiaire de registres parallèles 161 chargé au rythme $F_e/12$ de l'apparition des blocs de 12 bits en sortie du démultiplexeur 10 grâce à un signal d'horloge provenant de la base de temps 11. L'entrée restante de l'additionneur 160 est reliée à la sortie du premier circuit logique de calcul fournissant la somme $S_0$ par l'intermédiaire d'un multiplieur de signe commandé par le circuit de décision d'inversion 19 et constitué d'une batterie de trois portes logiques de type « non ou exclusif » 162, 163, 164. Ce multiplieur de signe réalise ou non, sur ordre du circuit de décision 19, une complémentation à un de la somme $S_0$ délivrée par le premier circuit logique de calcul. A chaque complémentation à un de la somme $S_0$ un niveau logique 1 est appliqué à l'entrée de retenue de l'additionneur pour la transformer en complémentation à deux et réaliser ainsi l'inversion de signe.

On remarque que l'on peut reboucler l'additionneur 160 sur lui-même en raison du principe de codage choisi qui fait qu'une somme numérique courante SNC initialisée à zéro reste dans la plage de variation de la somme numérique de mot SNM.

La figure 3 représente également la porte logique de type « ou exclusif » à deux entrées du circuit de décision d'inversion 19 qui comporte une sortie normale 190 et une sortie inversée 191. L'une des entrées de cette porte logique est connectée au bit de signe $S_{03}$ (bit de plus fort poids) de la somme $S_0$ délivrée par le premier circuit logique de calcul 15 tandis que l'autre est connectée en sortie des registres parallèles 161 sur celui affecté au bit de plus fort poids de la sortie de l'additionneur 160. La sortie normale 190 délivre le signal de commande d'inversion C qui commande les portes logiques de type « non ou exclusif » 162, 163, 164 effectuant la complémentation à un de la somme $S_0$ tandis que la sortie complémentée 191 est connectée à l'entrée de retenue de l'additionneur 160.

Lorsque la somme numérique de mot SNM est de même signe que la somme numérique courante SNC et qu'il faut effectuer une inversion du bloc de 12 bits délivré par le démultiplexeur 10 et son bit de parité P, la porte logique « ou exclusif » 19 reçoit les mêmes niveaux logiques sur ses deux entrées. Elle délivre alors sur sa sortie normale 190 un niveau logique 0 donnant aux portes logiques 162, 163, 164 une fonction inverseuse vis-à-vis de la somme $S_0$ (complément à 1) et sur sa sortie complémentée 191 un niveau logique 1 appliqué à l'entrée de retenue de l'additionneur 160 transformant le complément à 1 de la somme $S_0$ en un complément à 2 et commandant ainsi une opération de soustraction. Lorsque la somme numérique de mot SNM est de signe opposé à celui de la somme numérique courante SNC et qu'il ne faut pas inverser le bloc de 12 bits délivré par le démultiplexeur 10 et son bit de parité P, la porte logique « ou exclusif » 19 reçoit des niveaux logiques différents sur ses deux entrées. Elle délivre alors un niveau logique 1 sur sa sortie normale rendant les portes logiques 162, 163, 164 transparentes vis-à-vis de la somme $S_0$ et un niveau logique 0 sur sa sortie complémentée 191 commandant ainsi une opération d'addition.

La figure 3 montre aussi le circuit d'inversion 21 qui est constitué d'une batterie de treize portes logiques de type « non ou exclusif » à deux entrées connectées chacune par une entrée à la sortie 190 de la porte logique constituant le circuit de décision d'inversion 19 et recevant respectivement sur les autres entrées les douze bits du bloc délivré par le démultiplexeur 10 et le bit de parité P délivré par le premier circuit logique de calcul 15. Vis-à-vis du bloc de 12 bits délivré par le démultiplexeur 10 et du bit de parité P, cette batterie de treize portes logiques se comporte en circuit inverseur ou transparent selon qu'elle reçoit du circuit de décision d'inversion 19 un niveau logique zéro ou un.

On remarque que le choix d'une découpe du train de données incident Te en blocs de 12 bits combiné avec le choix d'un bit d'inversion ayant un niveau logique 1 pour exprimer un codage sans inversion permet de calculer la somme numérique de mot dans une arithmétique binaire à quatre chiffres en complément à deux par une simple sommation en binaire naturel du nombre de uns compris dans le bloc de 12 bits et son bit de parité augmentée de deux unités et que le choix d'un bit de parité transformant le bloc de 12 bits auquel il est associé, complété du bit d'inversion C, en un mot de 14 bits de parité impaire permet de calculer la somme numérique courante dans une arithmétique binaire à trois chiffres en complément à deux.

En variante, on peut choisir un bit d'inversion ayant un niveau logique 0 pour exprimer un codage sans inversion et calculer d'une manière analogue la somme numérique de mot en augmentant seulement d'une unité la sommation faite en binaire naturel. Une manière de concilier ces deux cas consiste à porter l'entrée de retenue de l'un des additionneurs 155, 156 au niveau logique 1 et l'entrée de retenue de l'autre au niveau logique correspondant pour le bit d'inversion C au signalement d'un bloc non inversé. Dans cette variante, le choix d'un bit de parité transformant le bloc de 12 bits auquel il est associé, complété du bit d'inversion C, en un mot de 14 bits de parité impaire correspond, pour ce bit de parité, à un niveau logique 0 ou 1 selon que le bloc de 12 bits est de parité impaire ou paire. Ce bit de parité peut être obtenu simplement sur une sortie inverseuse de l'additionneur 154.

En variante également, on peut choisir de former des mots codés de parité paire. Le calcul de la somme numérique de mot peut s'effectuer de façon analogue à celle décrite précédemment pour des mots codés de parité impaire. Pour le calcul de la somme numérique courante, on ne peut négliger le bit de plus faible poids de la somme $S_0$ qui est alors impaire, ce calcul s'effectue donc dans ce cas, pour des mots codés de 14 bits, dans une arithmétique binaire non plus à trois chiffres en complément à deux mais à quatre chiffres en complément à deux.

Le coefficient multiplicateur d'erreurs de ce codage ou rapport entre le nombre d'erreurs en ligne et le nombre d'erreurs après décodage est égal à :

$$12 \times 1/14 + 12/14 = 1,71$$

Il se déduit du fait qu'une erreur dans un bloc de 12 bits ne provoque pas d'autres erreurs au décodage, qu'une erreur sur le bit de parité P disparaît au décodage et qu'une erreur sur le bit d'inversion C entraîne 12 erreurs au décodage.

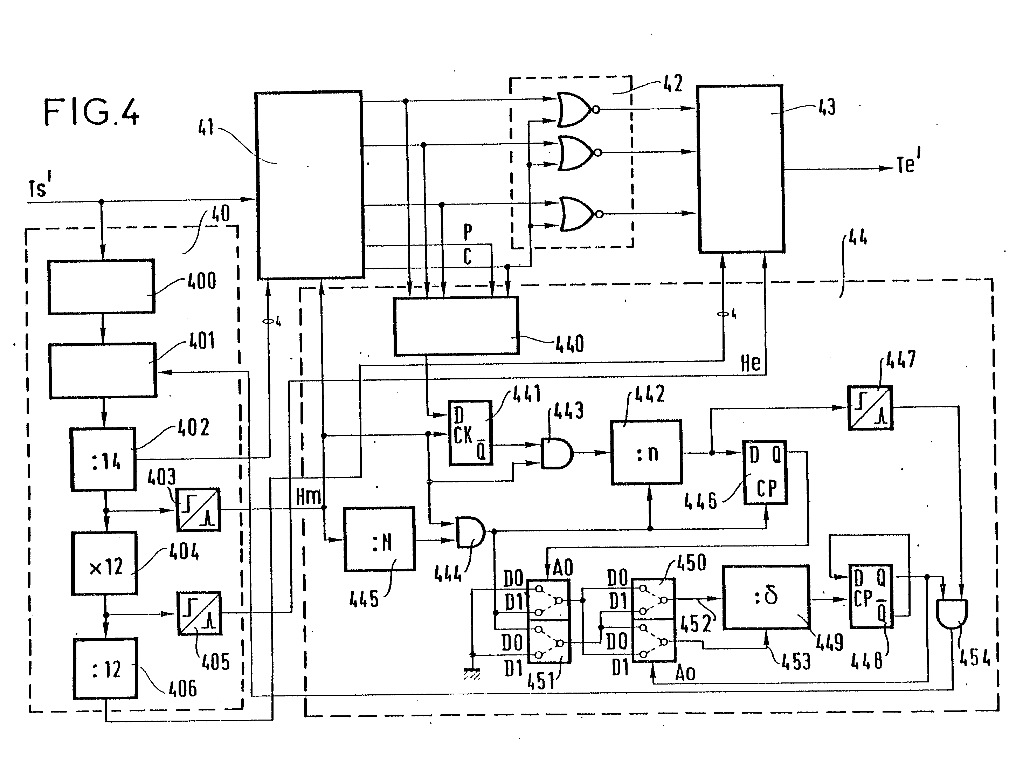

La figure 4 représente schématiquement un décodeur adapté au codeur qui vient d'être décrit. Celui-ci reçoit un train de données codées, binaires et isochrones Ts' ayant un débit Fs' et délivre en sortie un train de données binaires isochrones décodées Te' ayant un débit Fe' égal au 6/7 du débit d'entrée Fs'. Il présente en entrée une base de temps 40 engendrant, à partir de la cadence du train de données binaires incident Ts', un signal impulsionnel d'horloge mot $H_m$ synchronisé sur la découpe en mots de 14 bits utilisée au codage et un signal impulsionnel d'horloge bit $H_e$ donnant le rythme du train de données décodé Te', un démultiplexeur 41 commandé en adressage par la base de temps 40 et transformant, sous le contrôle du signal d'horloge mot $H_m$, le train de données codées incident en mots successifs de 14 bits parallèles selon une découpe identique à celle utilisée au codage, un circuit inverseur 42 disposé en sortie du démultiplexeur 41 complémentant ou non la partie de chaque mot correspondant au bloc de 12 bits utilisé au codage en fonction de la valeur du bit d'inversion C repéré par sa position dans un mot, un multiplexeur 43 commandé en adressage par la base de temps 40, recevant des blocs successifs de 12 bits parallèles délivrés par le circuit inverseur 42 et les transformant sous le contrôle du signal d'horloge bit $H_e$ en un train de données binaires synchrones décodées Te' et un circuit de récupération de la synchronisation mot 44 agissant par vol de cycle sur la base de temps 40 et opérant par contrôle de la parité des mots de 14 bits délivrés par le démultiplexeur 41.

La base de temps 40 engendre tout d'abord un signal d'horloge $H_s$ ayant une fréquence correspondant au débit du train de données codées incident Ts' grâce à un oscillateur 400 asservi en phase sur les transitions du train de données incident Ts'. Ce signal $H_s$ est ensuite appliqué par l'intermédiaire d'un circuit de vol de cycle 401 à un diviseur par quatorze 402 qui d'une part commande l'adressage du démultiplexeur 41 et d'autre part délivre un signal dont la fréquence Fm correspond au rythme de succession des mots de 14 bits utilisés au codage et dont les fronts montants sont convertis en impulsions d'horloge mot $H_m$ par un générateur d'impulsion 403. Un multiplicateur de fréquence par douze 404 placé à la suite du diviseur par quatorze 402 engendre un signal dont la fréquence Fe' correspond au débit du train de données binaires décodées Te' et dont les fronts montants sont convertis en impulsions d'horloge bit He par un générateur d'impulsions 405. Un diviseur par douze 406, placé à la suite du multiplicateur 404, fournit la commande d'adressage du multiplexeur 43.

Le circuit de vol de cycle 401 permet d'occulter à la demande un cycle de l'oscillateur 400, c'est par exemple une porte logique de type « et », et ainsi de retarder les impulsions d'horloge mot $H_m$ de la durée d'un symbole reçu. Cela permet de modifier les emplacements relatifs des symboles dans le découpage en mots de 14 bits jusqu'à l'obtention du bon découpage.

Le circuit de récupération de la synchronisation mot 44 comporte un circuit de calcul de parité 440 recevant les quatorze bits parallèles de la sortie du démultiplexeur 41 suivi d'un circuit de quantification d'erreur et d'un circuit de commande de resynchronisation.

Le circuit de calcul de parité 440 n'est pas détaillé, car il est de conception classique. Il est réalisé par exemple à l'aide d'une cascade de portes logiques de type « ou exclusif ».

Le circuit de quantification d'erreurs réagit lorsque le nombre d'erreurs de parité dépasse un nombre entier n prédéterminé pour N mots consécutifs de 14 bits délivrés par le démultiplexeur 42. Il comporte une bascule de type D 441 connectée en sortie du circuit de calcul de parité 440 et rythmée par les impulsions d'horloge mot $H_m$, un décompteur par n prépositionnable 442 recevant les impulsions d'horloge mot $H_m$ à la fois sur une entrée de décomptage contrôlée par une porte logique de type « et » 443 commandée par la sortie complémentée $\bar{Q}$ de la bascule de type D 441 et sur une entrée de prépositionnement à n contrôlée par une porte logique de type « et » 444 commandée par un diviseur par N 445 fonctionnant à partir des impulsions d'horloge mot $H_m$, une bascule de type D 446 mémorisant l'état de sortie du décompteur 442 avant chacun de ses prépositionnements à n et un générateur d'impulsion 447 délivrant une impulsion positive à chaque arrivée à zéro du décompteur 442.

La porte logique de type « et » 444 associée au diviseur par N 445 sélectionne une impulsion d'horloge mot $H_m$ tous les N mots consécutifs de 14 bits délivrés par le démultiplexeur 41. Celle-ci sert au repositionnement du décompteur 442 qui entre-temps décompte les erreurs de parité (niveau logique 0 en sortie du circuit de calcul de parité 440) traduisant l'apparition en sortie du démultiplexeur 41 d'un mot de parité opposée à celle choisie pour les mots codés et délivre un signal de sortie normalement au niveau logique 0 passant à un dès que le décompte atteint la valeur nulle.

Le générateur d'impulsions 447 transforme les transitions montantes du signal de sortie du décompteur 442 en impulsions positives destinées à commander au circuit de vol de cycle 401 la non-transmission d'un cycle de l'oscillateur 400 de manière à retarder d'une durée égale à celle d'un bit du train incident Ts', les impulsions d'horloge mot $H_m$ déterminant le découpage du train reçu Ts' en mots de 14 bits.

Le circuit de commande de resynchronisation contrôle par l'intermédiaire d'une porte logique de type « et » 454 la transmission des impulsions du générateur d'impulsions 447 de manière à ne l'autoriser que s'il y a eu plus de n erreurs de parité dans δ groupes consécutifs de N mots délivrés par le démultiplexeur 41 auquel cas on admet qu'il y a perte de la synchronisation mot, et à bloquer la transmission des impulsions du générateur d'impulsions 447 dès que le nombre d'erreurs de parité est devenu inférieur à n dans δ groupes consécutifs de N mots.

Outre la porte logique de type « et » 454, le circuit de commande de resynchronisation comporte une bascule de type D 448 montée en diviseur par deux contrôlant par sa sortie Q la porte logique 454, un décompteur par δ 449 prépositionnable connecté par sa sortie à l'entrée d'horloge de la bascule de type D 448 et deux sélecteurs à deux étages 450, 451 placés en cascade devant les entrées de décomptage 452 et de prépositionnement 453 du décompteur 449. L'un des sélecteurs, 450, est monté en inverseur devant les entrées de décomptage 452 et de prépositionnement 453 du décompteur 449 et commandé par la sortie Q de la bascule de type D 448. L'autre sélecteur, 451, est monté en interrupteur permettant d'appliquer à l'un ou l'autre de ses étages, de manière exclusive, les impulsions d'horloge mot $H_m$ sélectionnées par la porte logique de type « et » 444 et commandé par la bascule de type D 446.

Comme le décompteur précédent, le décompteur 449 engendre en sortie un niveau logique 0 qui passe au niveau logique 1 lorsque le décompte atteint la valeur nulle, cette transition entraînant le changement d'état de la bascule de type D 448.

Un niveau logique 0 en sortie de la bascule de type D 448 bloque la porte logique 454 et traduit un verrouillage de la synchronisation mot. Il commande l'adressage du sélecteur 450 de manière à aiguiller, en coopération avec le sélecteur 451, les impulsions d'horloge mot $H_m$ délivrées tous les N mots consécutifs par la porte logique 444 soit vers l'entrée de décomptage 452 si elles correspondent à des groupes de N mots pour lesquels il a été détecté plus de n erreurs de parité dans chacun d'eux, soit vers l'entrée du prépositionnement à δ 453 si elles correspondent à des groupes de N mots dont aucun ne comporte plus de n erreurs de parité.

Un niveau logique 1 en sortie de la bascule de type D 448 débloque la porte logique 454 et traduit un processus d'acquisition de la synchronisation mot à la suite d'une perte de verrouillage. Il commande l'adressage du sélecteur 450 de manière à aiguiller, en coopération avec le sélecteur 451, les impulsions d'horloge mot $H_m$ délivrées tous les N mots consécutifs par la porte logique 444 soit vers l'entrée de décomptage 452 si elles correspondent à des groupes de N mots dont aucun ne comporte plus de n erreurs de parité, soit vers l'entrée de prépositionnement à δ 453 si elles correspondent à des groupes de N mots dont chacun comporte plus de n erreurs de parité.

Le choix des entiers n, N, δ se fait de manière à optimiser des paramètres tels que l'invulnérabilité aux erreurs en ligne (intervalle entre fausses déclarations de perte de synchronisation mot dues aux erreurs en ligne), probabilité de fausse récupération de synchronisation mot, temps de reprise de synchronisation mot.

Lorsque la synchronisation mot est acquise, la parité donne une mesure du taux d'erreurs en ligne.

## Revendications

1. Procédé de transmission synchrone de données employant un code de type MB 1C 1T dans lequel les données à transmettre mises sous forme binaire sont partagées en blocs successifs de M bits, M étant un nombre entier, codés chacun par un mot à (M + 2) bits constitués des M bits du bloc inversés ou non selon que le mot codé à (M + 2) bits qui serait obtenu en l'absence d'inversion présente une somme numérique de mot SNM, égale à la différence entre le nombre de marques dites niveaux logiques un et d'espaces dits niveaux logiques zéro de ce mot, de même signe ou non que la somme numérique courante SNC égale à la différence entre les nombres de uns et de zéros des données déjà codées, et complétés par un bit d'inversion C signalant s'il y a eu inversion ou non et par un bit de trame inversé ou non avec les M bits du bloc, permettant de récupérer au décodage le découpage par blocs effectué au codage, caractérisé en ce que le bit de trame a une valeur déterminée en fonction de la parité de chaque bloc de M bits, le nombre M étant choisi égal à un nombre pair.

2. Procédé selon la revendication 1 dans lequel le nombre M est pris égal à 12 et où le bit d'inversion C a par définition un niveau logique 1 pour signaler un bloc non inversé et un niveau logique 0 pour signaler un bloc inversé, caractérisé en ce que la somme numérique de mot SNM calculée au codage pour décider de l'inversion ou la non-inversion des blocs est obtenue dans une arithmétique binaire en complément à deux par une sommation en binaire naturel des niveaux logiques un du bloc considéré et de son bit de trame augmentée de deux unités.

3. Procédé selon la revendication 1, dans lequel le nombre M est pris égal à 12 et où le bit d'inversion C a par définition un niveau logique 0 pour signaler un bloc non inversé et un niveau logique 1 pour signaler un bloc inversé, caractérisé en ce que la somme numérique de mot SNM calculée au codage pour décider de l'inversion ou la non-inversion des blocs est obtenue dans une arithmétique binaire en complément à deux par une sommation en binaire naturel des niveaux logiques un du bloc considéré et de son bit de trame augmentée d'une unité.

4. Procédé selon la revendication 1, caractérisé en ce que le bit de trame est un bit de parité transformant le bloc de M bits auquel il est associé, complété de son bit d'inversion C, en un mot de (M + 2) bits de parité impaire.

5. Procédé selon la revendication 4 dans lequel le nombre M est pris égal à 12 et où le bit d'inversion C a par définition au niveau logique 1 pour signaler un bloc non inversé et un niveau logique 0 pour signaler un bloc inversé, caractérisé en ce que la somme numérique courante SNC calculée au codage pour décider de l'inversion ou la non-inversion des blocs est obtenue par sommation algébrique dans une arithmétique binaire en complément à deux des sommes numériques de mot obtenues pour chaque bloc par une sommation en binaire naturel des niveaux logiques un du bloc considéré et de son bit de trame, augmentée de deux unités et changée de signe en cas d'inversion de bloc, le bit de plus faible poids des sommes numériques de mot n'étant pas pris en considération.

6. Procédé selon la revendication 4 dans lequel le nombre M est pris égal à 12 et où le bit d'inversion C a par définition un niveau logique 0 pour signaler un bloc non inversé et un niveau logique 1 pour signaler un bloc inversé, caractérisé en ce que la somme numérique courante SNC calculée au codage pour décider de l'inversion ou la non-inversion des blocs est obtenue par sommation algébrique dans une arithmétique binaire en complément à deux des sommes numériques de mot obtenues pour chaque bloc par une sommation en binaire naturel des niveaux logiques un du bloc considéré et de son bit de trame, augmentée d'une unité et changée de signe en cas d'inversion de bloc, le bit de plus faible poids des sommes numériques de mots n'étant pas pris en considération.

7. Procédé selon la revendication 1, caractérisé en ce que le bit de trame est un bit de parité transformant le bloc de M bits auquel il est associé, complété de son bit d'inversion C, en un mot de (M + 2) bits de parité paire.

8. Procédé selon la revendication 7 dans lequel le nombre M est pris égal à 12 et où le bit d'inversion C a par définition un niveau logique 1 pour signaler un bloc non inversé et un niveau logique 0 pour signaler un bloc inversé, caractérisé en ce que la somme numérique courante SNC calculée au codage pour décider de l'inversion ou la non-inversion des blocs est obtenue par sommation algébrique dans une arithmétique binaire en complément à deux des sommes numériques de mot obtenues pour chaque bloc par une sommation en binaire naturel des niveaux logiques un du bloc considéré et de son bit de trame, augmentée de deux unités et changée de signe en cas d'inversion de bloc.

9. Procédé selon la revendication 7 dans lequel le nombre M est pris égal à 12 et où le bit d'inversion C a par définition un niveau logique 0 pour signaler un bloc non inversé et un niveau logique 1 pour signaler un bloc inversé, caractérisé en ce que la somme numérique courante SNC calculée au codage pour décider de l'inversion ou la non-inversion des blocs est obtenue par sommation algébrique dans une arithmétique binaire en complément à deux des sommes numériques de mot obtenues pour chaque bloc par une sommation en binaire naturel des niveaux logiques un du bloc considéré et de son bit de trame, augmentée d'une unité et changée de signe en cas d'inversion de bloc.

10. Procédé selon la revendication 1, caractérisé en ce que le découpage en bloc effectué au codage est retrouvé au décodage à partir d'un contrôle du taux d'erreur de parité.

11. Codeur mettant en œuvre le procédé selon la revendication 1, caractérisé en ce qu'il comporte :
— un démultiplexeur (10) transformant les données à transmettre (Te) en blocs successifs de M bits,
— un circuit de calcul de la somme numérique de mot SNM et de la parité de chaque bloc (15) connecté en sortie du démultiplexeur,
— un circuit de calcul de la somme numérique courante SNC des données binaires déjà codées (16) opérant à partir du signal délivré par le circuit de calcul de la somme numérique de mot (15) et du signal de sortie d'un circuit de décision d'inversion (19),
— le circuit de décision d'inversion (19) comparant les signes de la somme numérique de mot SNM et de la somme numérique courante SNC,
— un circuit d'inversion (21) opérant sous la commande du circuit de décision d'inversion (19) sur le bloc de M bits disponible en sortie du démultiplexeur (10) et son bit de parité délivré par le circuit de calcul de la somme numérique de mot et de parité (15)
— et un multiplexeur (22) transformant les mots issus du circuit d'inversion (21) complétés par un bit d'inversion engendré par le circuit de décision d'inversion (13) en un train de données binaires isochrones (Ts).

12. Codeur selon la revendication 11 dans lequel le nombre M est pris égal à 12, caractérisé en ce que le circuit de calcul de la somme numérique de mot SNM et de parité comporte :
— un premier groupe de quatre additionneurs binaires complets (150, 151, 152, 153) de trois nombres binaires de un bit recevant sur leurs entrées individuelles les 12 bits parallèles de chaque bloc délivré par le démultiplexeur 10,
— un deuxième groupe de deux additionneurs binaires complets (155, 156) de deux nombres binaires de deux bits avec entrée de retenue additionnant deux à deux les nombres binaires fournis par le premier groupe d'additionneurs,
— un additionneur binaire complet de deux mots de quatre bits (157) avec entrée de retenue additionnant les nombres binaires fournis par le deuxième groupe d'additionneurs et délivrant la somme numérique de mot SNM,

**0 162 442**

— et un circuit de calcul de parité (154) dont le signal de sortie est appliqué à l'une des entrées de retenue des additionneurs (155, 156, 157), une autre entrée de retenue étant portée au niveau logique 1 et la dernière à un niveau logique correspondant pour le bit d'inversion au signalement d'un bloc non inversé.

## Claims

1. Synchronous data transmission method employing an MB 1C 1F type code in which the binary data to be transmitted is divided into successive blocks each of M bits, where M is an integer, each coded by a word comprising (M + 2) bits made up of the M bits of the block, complemented or not according to whether the word coded by (M + 2) bits, which would be obtained without complementing, would have a word digital sum SNM equal to the difference between the number of marks, referred to as logic 1 levels, and spaces, referred to as logic 0 levels, of the word of the same or opposite sign as the running digital sum SNC equal to the difference between the numbers of ones and zeros in the data already encoded ; and completed by a complement bit C indicating whether complementing is applied or not, and by a frame bit complemented or not with the M bits of the block, whereby on decoding the blocks formed at the encoding stage may be reconstituted, characterized in that the value of the frame bit is determined according to the parity of each block of M bits, with M being chosen to be an even number.

2. Method according to claim 1, wherein the value of M is 12 and the complement bit C is by definition at logic level 0 to indicate a non-complemented block or at logic level 1 to indicate a complemented block, characterized in that the word digital sum SNM computed at the encoding stage to decide wether or not to complement the blocks is produced in two's complement binary arithmetic by natural binary addition of the logic ones levels of the block concerned and its frame bit increased by two units.

3. Method according to claim 1, wherein the value of M is 12, the complement bit C is by definition at logic level 0 to indicate a non-complemented block and a logic level 1 to indicate a complemented block ; characterized in that the word digital sum SNM computed at the encoding stage to decide whether or not to complement the blocks is produced in two's complement binary arithmetic by natural binary addition of the logic ones levels of the block concerned and its frame bit, increased by one unit.

4. Method according to claim 1, characterized in that the frame bit is a parity bit transforming the associated block of M bits with its complement bit C into an odd parity word of (M + 2) bits.

5. Method according to claim 4, wherein the value of M is 12, the complement bit C is by definition at logic level 1 to indicate a non-complemented block and at logic level 0 to indicate a complemented block, characterized in that the running digital sum SNC computed at the encoding stage to decide whether or not to complement the blocks is produced in two's complement binary arithmetic by algebraic addition of · the word digital sums produced for each block by natural binary addition of the logic ones levels of the block concerned and its frame bit, increased by two units and with the sign changed in the event that the block is complemented, the least significant bit of each word digital sum being ignored.

6. Method according to claim 4, wherein the value of M is 12, the complement bit C is by definition at logic level 0 to indicate a non-complemented block and at logic level 1 to indicate a complemented block, characterized in that the running digital sum SNC computed at the encoding stage to decide whether or not to complement the blocks is produced in two's complement binary arithmetic by algebraic addition of the word digital sums produced for each block by natural binary addition of the logic ones levels of the block concerned and its frame bit, increased by one unit and with the sign changed in the event that the block is complemented, the least significant bit of each word digital sum being ignored.

7. Method according to claim 1, characterized in that the frame bit is a parity bit transforming the associated block of M bits with its complement bit C into an even parity word of (M + 2) bits.

8. Method according to claim 7, wherein the value of M is 12, the complement bit C is by definition at logic level 1 to indicate a non-complemented block and at logic level 0 to indicate a complemented block, characterized in that the running digital sum SNC computed at the encoding stage to decide whether or not to complement the blocks is produced in two's complement binary arithmetic by algebraic addition of the word digital sums produced for each block by natural binary addition of the logic ones levels of the block concerned and its frame bit, with the sum increased by two units and with the sign changed in the event that the block is complemented.

9. Method according to claim 7, wherein the value of M is 12, the complement bit C is by definition at logic level 0 to indicate a non-complemented block and at logic level 1 to indicate a complemented block, characterized in that the running digital sum SNC computed at the encoding stage to decide whether or not to complement the blocks is produced in two's complement binary arithmetic by algebraic addition of the word digital sums produced for each block by natural binary addition of the logic ones levels of the block concerned and with the sign changed in the event that the block is complemented.

10. Method according to claim 1, characterized in that the·division into blocks effected at the encoding stage is reconstituted at the decoding stage by monitoring the parity error rate.

11. Encoder implementing the method according to claim 1, characterized in that it comprises :
— a demultiplexer (10) transforming the data to be transmitted (Te) into successive blocks of M bits,

**0 162 442**

— a circuit computing the word digital sum SNM and the parity of each block (15) connected to the output of the demultiplexer,

— a circuit computing the running digital sum SNC of the binary data already encoded (16) on the basis of the output signal from the circuit computing the digital word sum (15) and the output signal from said complementing decision circuit (19),

— the complementing decision circuit (19) comparing the signs of the word digital sum SNM and the running digital sum SNC,

— a complementing circuit (21) controlled by the complementing decision circuit (19) processing the block of M bits available at the output of the demultiplexer (10) and its parity bit delivered by the circuit computing the word digital sum and parity (15), and

— a multiplexer (22) transforming into an isochronous binary data bit stream (Ts) the words delivered by the complementing circuit (21) to which has been added a complement bit delivered by the complementing decision circuit (13).

12. Encoder according to claim 11, wherein the value of M is 12, characterized in that the circuit computing the word digital sum SNM and parity comprises :

— a first group of four full binary adders (150, 151, 152, 153) adapted to add three binary numbers each of one bit receiving on their individual inputs the 12 parallel bits of each block delivered by the demultiplexer (10),

— a second group of two full binary adders (155, 156) adapted to add two binary numbers each of two bits with a carry input adding pairs of binary numbers delivered by the first group of adders,

— a full binary adder adapted to add two binary words each of four bits (157) with a carry input adding binary numbers delivered by the second group of adders and delivering the word digital sum SNM, and

— a parity computation circuit (154) the output signal of which is fed to a carry input of the adders (155, 156, 157), another carry input being held at logic level 1 and a last carry input being held at a logic indication of a non-complemented block.

**Patentansprüche**

1. Synchrones Datenübertagungsverfahren unter Verwendung eines Kodes vom Typ MB 1C 1T, bei welchem die zu übertragenden Binärdaten in aufeinanderfolgende Blöcke zu M Bits unterteilt sind, wobei M eine ganze Zahl ist, und die Blöcke jeweils durch ein Bitwort (M + 2) bestehend aus M Bits des invertierten oder nichtinverierten Blockes kodiert sind, je nachdem, ob das mit (M + 2) Bits kodierte Wort bei fehlender Inversion eine Digitalwortsumme (SNM) ergibt, welche gleich der Differenz zwischen der Anzahl der Markierungen, genannt logische 1-Pegel, und der Lücken, genannt logische 0-Pegel, dieses Wortes ist, mit dem gleichen oder nichtgleichen Vorzeichen wie die laufende Summe SNC, die gleich der Differenz zwischen der jeweiligen Anzahl der Einsen und Nullen der bereits kodierten Daten, und vervollständigt durch ein Inversionsbit C, welches angibt, ob eine Inversion stattgefunden hat oder nicht, so wie durch ein invertiertes oder nichtinvertiertes Rahmenbit aus M Bits des Blocks, welches bei der Dekodierung die bei der Kodierung erfolgte Unterteilung in Blöcke wiederherzustellen gestattet, dadurch gekennzeichnet, daß das Rahmenbit einen Wert besitzt, der in Abhängigkeit von der Parität jedes Blocks aus M Bits bestimmt wird, wobei für M eine gerade Zahl gewählt wird.

2. Verfahren nach Anspruch 1, bei dem die Zahl M gleich 12 gewählt ist und das Inversionsbit C definitionsgemäß einen logischen 1-Pegel besitzt, um einen nichtinvertierten Block zu kennzeichnen, sowie einen logischen 0-Pegel, um einen invertierten Block zu kennzeichnen, dadurch gekennzeichnet, daß die bei der Kodierung, zur Entscheidung über die Inversion oder Nichtinversion der Blöcke, berechnete numerische Wortsumme SNM durch Summierung der logischen 1-Pegel des betrachteten Blockes und seines um eine Einheit erhöhten Rahmenbits im natürlichen Binärsystem mit Hilfe einer Binärarithmetik mit Zweierkomplement gewonnen wird.

3. Verfahren nach Anspruch 1, bei dem die Zahl M gleich 12 gewählt ist und das Inversionsbit C definitionsgemäß einen logischen 0-Pegel besitzt, um einen nichtinvertierten Block zu kennzeichnen, sowie einen logischen 1-Pegel, um einen invertierten Block zu kennzeichnen, dadurch gekennzeichnet, daß die bei der Kodierung, zur Entscheidung über die Inversion oder Nichtinversion der Blöcke, berechnete numerische Wortsumme SNM durch Summierung der logischen 1-Pegel des betrachteten Blockes und seines um eine Einheit erhöhten Rahmenbits im natürlichen Binärsystem mit Hilfe einer Binärarithmetik mit Zweierkomplement gewonnen wird.

4. Verfahren nach Anspruch 1, dadurch gekennzeichnet, daß das Rahmenbit ein Paritätsbit ist, welches den Block von M Bits, dem es zugeordnet ist, nach Ergänzung um sein Inversionsbit C, in ein ungradzahliges Paritätsbit mit (M + 2) Bits umwandelt.

5. Verfahren nach Anspruch 4, bei dem die Zahl M gleich 12 gewält ist und das Inversionsbit C definitiongemäß einen logischen 1-Pegel besitzt, um einen nichtinvertierten Block zu kennzeichnen, sowie einen logischen 0-Pegel, um einen invertierten Block zu kennzeichnen, dadurch gekennzeichnet, daß die bei der Kodierung, zur Entscheidung über die Inversion oder Nichtinversion der Blöcke, berechnete laufende Digitalsumme SNC durch algebraische Summierung der digitalen Wortsummen mit Hilfe einer Binärarithmetik mit Zweierkomplement gewonnen wird, wobei die Wortsummen für jeden Block im natürlichen Binärsystem durch eine Summierung der logischen 1-Pegel des betrachteten Blocks und seines Rahmenbits erhalten und die Summierung im Falle der Blockinversion um zwei Einheiten erhöht sowie im Zeichen gewechselt werden, und das Bit mit dem niedrigsten Stellenwert in den digitalen Wortsummen vernachlässigt wird.

6. Verfahren nach Anspruch 4, bei dem die Zahl M gleich 12 gewählt ist und das Inversionsbit C definitionsgemäß einen logischen 0-Pegel besitzt, um einen nichtinvertierten Block zu kennzeichnen, sowie einen logischen 1-Pegel, um einen invertierten Block zu kennzeichnen, dadurch gekennzeichnet, daß die bei der Kodierung, zur Entscheidung über die Inversion oder Nichtinversion der Blöcke, berechnete laufende Digitalsumme SNC durch algebraische Summierung der digitalen Wortsummen mit Hilfe einer Binärarithmetik mit Zweierkomplement gewonnen wird, wobei die Wortsummen für jeden Block im natürlichen Binärsystem durch eine Summierung der logischen 1-Pegel des betrachteten Blocks und seines Rahmenbits erhalten und die Summierung im Falle der Blockinversion um eine Einheit erhöht sowie im Zeichen gewechelt werden, und das Bit mit dem niedrigsten Stellenwert in den digitalen Wortsummen vernachlässigt wird.

7. Verfahren nach Anspruch 1, dadurch gekennzeichnet, daß das Rahmenbit ein Paritätsbit ist, welches dem Block von M Bits, dem es zugeordnet ist, nach Ergänzung um sein Inversionsbit C, in ein geradzahliges Paritätsbit mit (M + 2) Bits umwandelt.

8. Verfahren nach Anspruch 7, bei dem die Zahl M gleich 12 gewählt ist und das Inversionsbit C definitionsgemäß einen logischen 1-Pegel besitzt, um einen nichtinvertierten Block zu kennzeichnen, sowie einen logischen 0-Pegel, um einen invertierten Block zu kennzeichnen, dadurch gekennzeichnet, daß die bei der Kodierung, zur Entscheidung über die Inversion oder Nichtinversion der Blöcke, berechnete laufende Digitalsumme SNC durch algebraische Summierung der digitalen Wortsummen mit Hilfe einer Binärarithmetik mit Zweierkomplement gewonnen wird, wobei die Wortsummen für jeden Block im natürlichen Binärsystem durch eine Summierung der logischen 1-Pegel des betreffenden Blocks und seines Rahmenbits erhalten und die Summierung im Falle der Blockinversionum zwei Einheiten erhöht sowie im Zeichen gewechselt werden.

9. Verfahren nach Anspruch 7, bei dem die Zahl M gleich 12 gewählt ist und das Inversionsbit C definitionsgemäß einen logischen 0-Pegel besitzt, um einen nichtinvertierten Block zu kennzeichnen, sowie einen logischen 1-Pegel, um einen invertierten Block zu kennzeichnen, dadurch gekennzeichnet, daß die bei der Kodierung, zur Entscheidung über die Inversion oder Nichtinversion der Blöcke, berechnete laufende Digitalsumme SNC durch algebraische Summierung der digitalen Wortsummen mit Hilfe einer Binärarithmetik mit Zweierkomplement gewonnen wird, wobei die Wortsummen für jeden Block im natürlichen Binärsystem durch eine Summierung der logischen 1-Pegel des betrachteten Blocks und seines Rahmenbits erhalten und die Summierung im Falle der Blockinversion um eine Einheit erhöht sowie im Zeichen gewechselt werden.

10. Verfahren nach Anspruch 1, dadurch gekennzeichnet, daß die bei der Kodierung erfolgte Unterteilung in Blöcke bei der Dekodierung durch Überprüfung der Paritätsfehlerrate wiederhergestellt wird.

11. Kodierer zur Durchführung des Verfahrens nach Anspruch 1, dadurch gekennzeichnet, daß er aufweist :
— einen Demultiplexer (10), welcher die zu übertragenden Daten (Te) in aufeinanderfolgende Blöcke mit M Bits umwandelt,
— einen Kreis zur Berechnung der laufenden Digitalsumme SNC der bereits kodierten Binärdaten (16), welcher auf der Grundlage des vom Rechenkreis der digitalen Wortsumme (15) und vom Inversionsentscheidungskreis (19) jeweils gelieferten Signals arbeitet,
— wobei der Inversionsentscheidungskreis (19) die Vorzeichen der digitalen Wortsumme SNM und der laufenden Digitalsumme SNC vergleicht,
— einen Inversionskreis (21), welcher unter dem Befehl des Inversionsentscheidungskreises (19) auf den am Ausgang des Demultiplexers (10) erscheinenden Block von M Bits sowie auf sein vom Rechenkreis der digitalen Wort- und Paritässumme (15) geliefertes Paritätsbit einwirkt, und
— einen Multiplexer (22), welcher die vom Inversionskreis (21) gelieferten und um ein Inversionsbit ergänzten, dabei vom Inversionsentscheidungskreis erzeugten, Worte in eine Folge von isochronen Binärdaten (Ts) umwandelt.

12. Kodierer nach Anspruch 11, bei dem die Zahl M gleich 12 gewählt ist, dadurch gekennzeichnet, daß der Kreis zur Berechnung der digitalen Wortsumme SNM und der Parität umfaßt :
— eine erste Gruppe von vier vollständigen Binäraddierern (150, 151, 152, 153) für drei Binärzahlen zu 1 Bit, welche an ihren jeweiligen Eingängen die 12 parallelen Bits jedes vom Demultiplexer (10) gelieferten Blocks empfangen,
— eine zweite Gruppe von zwei vollständigen Binäraddierern (155, 156) für zwei Binärzahlen zu 2 Bits, mit Übertragseingang, welche paarweise die von der ersten Addierergruppe gelieferten Binärzahlen addieren,
— einen vollständigen Binäraddierer für zwei Worte zu vier Bits (157), mit Übertragseingang, welcher die von der zweiten Addierergruppe gelieferten Binärzahlen addiert und die digitale Wortsumme SNM liefert,

— und einen Paritätsberechnungskreis (154), dessen Ausgangssignal an einen der Übertragseingänge der Addierer (155, 156, 157) geschaltet ist, wobei ein anderer Übertragseingang auf den logischen 1-Pegel und der letzte auf einen logischen Pegel gebracht ist, welcher beim Inversionsbit der Kennzeichnung eines nichtinvertierten Blocks entspricht.

# FIG.1

# FIG.2

FIG.3

0 162 442

FIG.4